# EUROPEAN PATENT APPLICATION

(11) **EP 3 998 696 A1**
(43) Date of publication of application: **18.05.2022**
(21) Application number: 21164303.6
(22) Date of filing: 23.03.2021
(51) Int. Cl.: H02K 7/14, H02K 9/22, H02K 1/27

(54) **COOLING FOR AN ELECTRIC DRIVE OF AN AIRCRAFT**

(71) Applicant: Lilium eAircraft GmbH, 82234 Wessling (DE)
(72) Inventor: Vermeiren, Sébastien, 80997 Munich (DE); Wiegand, Daniel, 82234 Weßling (DE)
(74) Representative: Schmidt, Steffen

(57) **Abstract**

The invention relates to an electric drive with a fan for an aircraft, wherein the electric drive comprises an electric machine, in particular a permanently excited electric machine, with a stator and a rotor, and the propeller comprises a shaft and rotor blades, wherein the rotor blades are attached to the shaft, the rotor comprises a laminated core and magnets, wherein the laminated core forms an annular arrangement around the shaft, and the rotor blades, the shaft, the laminated core and the magnets are connected in a thermally conductive manner so that the rotor blades form a heat sink for the magnets.

## Description

The present invention relates to an electric drive with a fan, including a ducted fan, a compressor or a propeller for an aircraft, wherein the electric drive comprises a particularly permanently excited electric machine with a stator and a rotor.

In the development of electric propulsion systems for vehicles, there is a need for electric machines capable of outputting high power such that the system power of all combined electric machines is several kilowatts (kW), for example for passenger vehicles, several hundred kilowatts, for example for a short-range aircraft or a truck, or up to a megawatt (MW), for example for a cargo machine or a supercar. Highly optimized and efficient electric machines are needed to meet the requirements of these application fields. For aircraft, another factor is that the electric drives must have a high power-to-weight ratio (kW/kg) and at the same time be designed to be particularly fail-safe.

For the generation of electric fields in electrical machines, permanent magnets are generally used instead of current-carrying coils (with high excitation loss), which are operated at high switching frequencies. This has the advantage that the efficiency of the electrical machine increases, but leads to a strong heating of the magnets and rotor yoke, especially in machines with high power output. As the temperature of the magnets increases, however, the magnetic field output decreases, which in turn reduces the efficiency of the electrical machine. When a magnet is operated beyond its maximum operating temperature, it initially experiences a reversible loss, becomes less magnetic and the efficiency of the drive drops. Above a higher temperature threshold, however, the magnet suffers an irreversible loss at which the efficiency of the machine is permanently impaired by permanent demagnetization of the magnets. To counteract the problem of temperature-induced demagnetization, the magnets of electrical machines with permanent high power output must be cooled. Two systems are known from the prior art. On the one hand, the magnets can be liquid-cooled. On the other hand, a cooling air flow can be directed to the air gap (electromagnetic gap) between rotor and stator. However, these options have different disadvantages, especially for use in aircraft. Without cooling of the magnet the power output must be limited so that the natural convection occurring around the magnets is enough to keep them below a maximum temperature. Thus, the efficiency of the electric drive would suffer without cooling. Liquid cooling is fundamentally highly complex in its design, increases the overall weight of the drive, and does not provide the required reliability and fail-safety. Further, cooling the rotating magnets of the electric machine rotor would add a significantly greater degree of complexity to the required liquid cooling system. Alternatively, diverting cooling air into the electric drive could be used. This would require the construction of a complex airflow system, increasing the overall mass of the drive system. Furthermore, the cooling performance of this solution is not particularly efficient due to the cooling medium of air and the small dimensions of the air gap in the electric machine. Furthermore, the permanent cooling air flow of the electric machine has to be ensured in all possible operating conditions, e.g. in cruise flight, in hover flight of a S/VTOL, or in ground operation of an aircraft.

Therefore, the task of the present invention is to provide an electric propulsion system with a fan for an aircraft, which on the one hand offers a highly efficient cooling of the motor, and on the other hand has a fail-safe design with low complexity and low weight, in order to ensure an electrically efficient and at the same time reliable operation of the aircraft.
The task is solved by an electric drive with a fan according to claim 1 and an aircraft with at least one such electric drive according to claim 13. In this specification, the term fan is intended to cover a ducted fan, a compressor and a propeller. In embodiments of the invention, it may comprise blades, a disk, and connections to a shaft.

A special feature of the electric drive with a fan according to the present invention is that the cooling of the magnets of the electric motor of the drive can be performed by the rotor blades, since the magnets of the rotor are in good thermal contact with a shaft and the shaft is in good thermal contact with the rotor blades attached thereto. These thermally conductive connections between the components and the components themselves thus conduct heat from the magnets of the rotor to the rotor blades of the aircraft, which are always cooled by incoming air during operation of the propulsion system (as the rotor blades are operating by nature in a high-velocity airflow, and as a consequence act as very powerful cooling fins). By establishing a thermally conductive connection between the relevant components, which are jointly rotated by the electric drive, the complexity of the system can be kept low, since all relevant components rotate together around the axis of rotation of the drive. The direct thermal coupling of the heating components with the rotor blades also means that when the electric machine rotates at high speeds, resulting in greater heating of the magnets, the rotational speed of rotor blades also increases, drawing in more air and ensuring cooling of the magnets regardless of the actual speed of movement of the aircraft, even when the aircraft is in hover or ground mode with little or no locomotion to the surrounding air mass. The use of the rotor blades of the propulsion system as heat sinks for the magnets of the rotor of the electric machine for an aircraft has the further advantage that, on the one hand, the complexity and power-to-weight ratio of the propulsion system with the cooling system according to the invention is approximately on a par with the complexity and power-to-weight ratio of an identical propulsion system without cooling, and, on the other hand, the highly efficient cooling system ensures the efficiency of the electric propulsion system even under heavy load (high heat input), thereby guaranteeing the long-term reliability of the propulsion system and allowing high power density design.

According to a preferred embodiment, the electric machine is designed as an internal rotor. This has the advantage that the rotor of the electric machine, which has a circular structure due to its design, is arranged internally. In an alternative embodiment, the machine can also be designed as an out-runner, which may even have a higher torque and a possibly higher power than an in-runner, but then the stator cooling becomes more complex. The embodiment of an internal rotor is particularly advantageous when the internal rotor is combined with fast rotating propellers with a small propeller diameter. For rotor cooling of an internal rotor, the cooling of the magnets according to the invention is particularly suitable, since liquid cooling would be very complex due to the limited installation space, and the inflow of cooling air is severely restricted due to the propeller being centrally located on the same axis of rotation.

Preferably, the magnets are arranged on the outside of the laminated core with an annular structure. The advantage of this arrangement is that the magnets are located in the radially outermost position of the annular rotor around the axis of rotation of the drive system. This maximizes the magnetic flux between the stator and rotor, with the rotor and stator separated solely by the air gap. The distance between the rotor and stator (air gap) is chosen to be as small as possible for high efficiency of the electric machine, but has a minimum distance resulting from manufacturing tolerances. Thus, the cooling according to the invention allows an efficient design of the electric machine, since the cooling does not have to pass through the air gap. In a further preferred embodiment, the magnets are arranged in a Halbach configuration. This arrangement also increases the power density, but reduces the necessity for an iron (laminated) core. In a possible implementation, there is no iron or laminated core. In this embodiment the cooling paths between the magnets and the blades acting as heat sinks, maybe even more reduced in comparison to an embodiment including a (laminated) iron core. In another implementation of the present invention, the magnets include an outer sleeve. The outer sleeve makes it even more difficult to extract heat from the magnets so that the cooling over the blades acting as heat sinks provides a particular advantage in such a configuration.

According to a preferred embodiment, the shaft is designed as a hollow shaft to reduce the mass of the drive system and improve the power-to-weight ratio. Thus, in particular, the rotating masses are kept low to improve the efficiency of the drive system. Further, this allows airflow to be directed through the shaft to aid in additional cooling. Alternatively, the cavity could also be filled with a coolant to improve the heat transfer from the electric machine area to the rotor blade area.

According to a preferred embodiment, the laminated core is formed of laminated ferrous steel to provide a soft magnetic core to prevent the occurrence of eddy currents even at high excitation frequencies, which in turn would convert electrical energy into heat. The embodiment of the laminated and insulated sheet stacks is also referred to as "laminated". This reduces the heat input into the electrical machine, thus requiring less cooling power.

According to a preferred embodiment, the shaft is fastened in the rotor of the electric machine by frictional connection, for example by press-fitting. This type of connection has the advantage that the thermally conductive connection is already provided by the design due to the two-dimensional contact of the connected components. Furthermore, this type of fastening does not require any additional fasteners, which means that the mass of the moving components can be kept low.

According to an alternative embodiment, the shaft is fastened to the rotor of the electric machine by material bonding, for example by welding, in particular friction welding, or bonding. This form of connection also has the advantage that the components are connected to each other over a wide area, so that thermal conductivity is good. Welding is particularly preferred because the metallic components are directly joined without an insulating separating layer or gap. Furthermore, this type of fastening also offers all the advantages of a form-fit connection and requires no additional fasteners, so that the overall mass can be kept low. In an alternative embodiment, the magnets may also be fixed by a glue. While a conventional glue might provide an isolating layer between the shaft and the magnets, in the preferred embodiments of the present invention, a glue with an increased heat transfer coefficient may be used. For example, the glue may include additives such as aluminum oxide to increase the heat transfer coefficient.

According to a preferred embodiment, the electrical machine is an AC synchronous machine preferably combined with a controller to use DC for operating the machine when using a battery as a power supply. An AC permanent magnet surface mounted (AC PMSN) machine has a high efficiency and a low abrasion. These drive types are particularly suitable for aircraft due to their high reliability and efficiency. Cooling according to the invention is particularly suitable for this type of motor, since the areas of the magnets are of highest criticality, due to the demagnetization temperature of the magnets.

Further advantages and features of the present invention will become clear from the following description of a preferred embodiment, which is given in connection with the accompanying figures. The figures show the following:

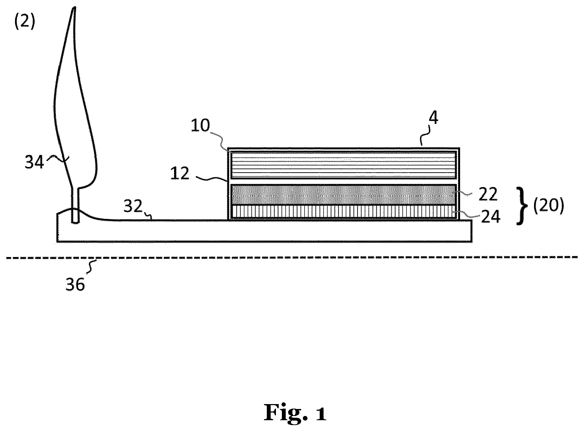

- Figure 1: shows the electric actuator with a propeller according to one embodiment of the invention in a lateral cross-section, with only an upper half shown.

Figure 1 shows an electric actuator 2 with a propeller 12. It should be noted that the individual shapes of the components are shown for illustrative purposes only and, in particular, the proportions are not preserved. In the following, reference is made to a rotor 8 of an electric machine 4, which is also referred to alternatively as an armature in the technical literature. These terms are used interchangeably. In the context of the present invention, it is also to be understood that components without a precise material specification, which are to consist of a suitable, heat-conducting material, can be formed, in particular, of aluminum, copper, iron or steel, as well as alloys with components of these metals.

Figure 1 shows the structure of an electric drive 2 according to the invention, comprising a propeller 12 and an electric machine 4 arranged radially about the common axis of rotation 24 of the electric machine 4. The electric machine 4 comprises a stator 10, which is formed from copper windings, and a rotor 20. Between the rotor 20 and the stator 10 there is an air gap 12, which is kept as small as possible by design so that the rotor and the stator do not touch, but a magnetic flux between the stator and the rotor can be transmitted as unhindered as possible.

The electric machine 4 is designed as an internal rotor. Here, magnets 20 of the rotor 8 face the air gap 24 and are arranged radially around the axis of rotation 24. The magnets 20 are connected to the laminated core 18, which is also arranged radially around the axis of rotation 24 and forms the magnetic core, is made of soft iron. The annular laminated core 18 is connected to the shaft 10, which is arranged within the laminated core 18. According to a preferred embodiment, the shaft 10 is formed as a hollow shaft. Furthermore, the shaft 14 is connected to the rotor blades 16. Thereby, within the scope of this application, connections are also included in which the rotor blades 16 and shaft 14 are not directly connected, but have been connected by means of a disk. For this case, the rotor blades should preferably be partially inserted into the disk for connection thereto in order to achieve better heat conduction between the components. However, even more preferred is a connection of the rotor blades with the shaft in one piece which is also known as "blade-integrated disk" (blisk). In this embodiment, the blades are machined from one piece together with a disk on the shaft. The single piece provides the best heat transfer coefficient between the blades and the shaft.

The cooling according to the invention results from the thermally conductive connection of the magnets 22 and a laminated core 24 arranged around and rigidly connected to a shaft 32. Rotor blades 16 are radially attached to the shaft 32 outside the motor. The connection from the rotor blades 34, via the shaft 32, the laminated core 24 to the magnets 22 is such that all joints have good thermal conductivity. In the context of this application, good thermal conductivity is defined as a thermal conductivity of at least 50W/(m*K), preferably 100W/(m*K). This allows the rotor blades 16 to act as heat sinks for the magnets 22.

As described previously, heat input in an electric machine 4 occurs particularly in the region of the magnets 22 and the laminated core 24. By cooling the magnets 22 and the laminated core 24 through the rotor blades 34 acting as heat sinks, the thermal demagnetization of the magnets 22 can be reduced. As a result, the electric machine can be operated in high power ranges over a constant period of time without having to accept large losses in efficiency due to the changing magnetic field. As a result, the power dissipation of the drive system is lower, so that less electricity is required to generate the same drive power. This reduces power consumption and consequently increases the range of an aircraft in relation to a defined battery capacity. Furthermore, the cooling also allows temporary operation at the power limit of the electric drive 2, e.g. during a thunderstorm or in case of a failure of other drive systems of the aircraft, without leading the magnets 20 into a temperature range of irreversible demagnetization. As a result, but also due to the position-independent cooling capacity, the system according to the invention is particularly fail-safe. The low complexity of the cooling system in the manufacture of the electric drive system 2 also makes it cost-effective.

### List of reference signs:

- 2: electric drive
- 4: electric machine

- 10: stator with copper windings
- 12: air gap

- 20: rotor
- 22: magnets
- 24: laminated core

- 30: propeller
- 32: shaft
- 34: rotor blade
- 36: rotation axis

## Claims

1. Electric drive (2) with a fan (30) for an aircraft, wherein
the electric drive (2) comprises an electric machine (4), in particular permanently excited, with a stator (10) and a rotor (20),
and the fan (30) has a shaft (32) and rotor blades (34), wherein
the rotor blades (34) are attached to the shaft (32),
the rotor (20) comprises magnets (22), and
the rotor blades (34), the shaft (32), and the magnets (22) are thermally conductively connected so that the rotor blades (34) form a heat sink for the magnets (22).

2. Electric drive (2) with a propeller (30) according to claim 1, wherein the electric machine (4) is formed as an internal rotor.

3. Electric drive (2) according to claim 2, wherein the magnets (22) are mounted externally on an iron core (24) in an annular arrangement.

4. Electric drive (2) according to claim 3, wherein the iron core (24) is formed of laminated steel sheets.

5. Electric drive (2) according to any of the previous claims wherein the magnets are arranged in a Halbach array arrangement.

6. Electric drive (2) according to any one of the preceding claims, wherein the shaft (32) is formed as a hollow shaft.

7. Electric drive (2) according to one of the preceding claims, wherein the shaft (32) is connected to the rotor (20) of the electric machine (4) by means of a press fit or by welding, preferably frictional welding.

8. Electric drive (2) of any one of the claims 1 to 6, wherein the rotor blades are connected to the shaft by a disk and the rotor blades, the disk and the shaft are machined in a single piece.

9. Electric drive (2) according to any one of claims 1 to 6, wherein the shaft (32) is connected to the rotor (20) of the electric machine (4) in a material-locking manner.

10. Electric propulsion (2) comprising a propeller (30) according to any one of the preceding claims, wherein the electric machine (4) is an AC synchronous machine.

11. Aircraft with at least one electric drive (2) with a fan (30) according to any one of claims 1 to 9.
